# EUROPEAN PATENT APPLICATION

(11) **EP 3 070 127 A1**
(43) Date of publication of application: **21.09.2016**
(21) Application number: 14862872.0
(22) Date of filing: 10.11.2014
(51) Int. Cl.: C08L 75/04, C08L 71/00, B01D 63/02, B01D 71/54

(54) **POLYURETHANE RESIN COMPOSITION FOR HOLLOW FIBER MEMBRANE POTTING AGENT AND HOLLOW FIBER MEMBRANE MODULE**

(30) Priority: 12.11.2013 KR 20130136946
(71) Applicant: Lotte Chemical Corporation, Dongjak-gu Seoul 07071 (KR)
(72) Inventor: BAE, Su Gyeong, Daejeon 305-720 (KR); LEE, Kwan Soo, Daejeon 305-720 (KR); KIM, Jong Pyo, Daejeon 305-721 (KR)
(74) Representative: Agasse, Stéphane
(86) International application number: PCT/KR2014/010745
(87) International publication number: WO 2015/072711

(57) **Abstract**

Provided are a polyurethane resin composition for a hollow fiber membrane potting agent, and a hollow fiber membrane module, and more particularly, a polyurethane resin composition for a hollow fiber membrane potting agent, which includes a polyurethane resin and a hydrophilic additive to have excellent resistance to internal/external pressure, and also to have excellent sealing performance, antifouling property, etc., and a hollow fiber membrane module including a cured product thereof.

## Description

### [TECHNICAL FIELD]

The present invention relates to a polyurethane resin composition for a hollow fiber membrane potting agent, and a hollow fiber membrane module, and more particularly, to a polyurethane resin composition for a hollow fiber membrane potting agent, which has excellent resistance to internal/external pressure, and also has excellent sealing performance, antifouling property, etc., and a hollow fiber membrane module including the composition.

### [BACKGROUND OF ART]

For liquid or gas separation, polymer membranes are used in a variety of fields such as medical, semiconductor, battery, and bioengineering fields, dairy products, beverages, and foods, a water treatment field, etc. Such polymer membranes may be prepared in the form of a flat sheet membrane module, a spiral-wound module, a hollow fiber membrane module, etc., and then applied to each field. In general, the hollow fiber membrane module is applied after being manufactured as an external pressure type module, an internal pressure type module, an immersion type module, etc.

The hollow fiber membrane module is a filtration device using hollow fibers as separation membranes. Such a hollow fiber membrane module has been widely utilized in ultrafiltration or microfiltration fields such as industrial fields including water treatment, medical fields including blood treatment, etc. Especially, its demand is rapidly growing in the use of domestic water purifiers, industrial water purifiers, artificial kidney, artificial lung, etc. Recently, large-scale hollow fiber membrane modules are required in order to reduce treatment costs.

The hollow fiber membrane module, in particular, external pressure type or internal pressure type hollow fiber membrane module is manufactured by a process of inserting hollow fiber membranes into a cylindrical case, and sealing both ends or one end thereof with a resin, and this process is called potting. An adhesive or filler composition used for potting of the hollow fiber membrane module includes polyurethane, epoxy resin, etc., and a flow path is formed by cutting this composition to manufacture the hollow fiber membrane module. This hollow fiber membrane module must maintain resistance and durability against external pressure during use or air pressure during washing of the hollow fiber membrane. If not, problems such as water leakage and rupture of the membrane occur. For this reason, it is important that a potted region of the hollow fiber membrane module has resistance to a force, sealing performance with the hollow fiber membrane, antifouling property, etc.

Japanese Patent Publication No. 1998-375496 discloses a potting composition for a separation membrane module, which includes sorbitol polyglycidyl ether, polyamine, a bisphenol epoxy resin, and a urethane modified epoxy resin. However, since this composition especially includes the bisphenol epoxy resin which is an environmentally problematic endocrine disrupting chemical, it is difficult to use the composition as a potting composition for a water treatment module.

Korean Patent Publication No. 2002-0065207 discloses coating of the hollow fiber membrane to prevent its damage, but detachment between a material used for coating of the hollow fiber membrane, and the filler and adhesive such as epoxy, urethane, etc. may occur, and an additional coating step is also required in the step of potting the hollow fiber membrane. Therefore, there are difficulties in the production process.

Accordingly, there is a demand to develop a polyurethane resin composition for a hollow fiber membrane potting agent, which has excellent mechanical properties, sealing performance, chemical resistance, etc. to minimize contamination of the hollow fiber membrane module and prevent detachment of the hollow fiber membrane.

### [PRIOR ART DOCUMENTS]

### [Patent Documents]

(Patent Document 0001) Japanese Patent Publication No. 1998-375496
(Patent Document 0002) Korean Patent Publication No. 2002-0065207

### [DETAILED DESCRIPTION OF THE INVENTION]

### [Technical Problem]

The present invention provides a polyurethane resin composition for a hollow fiber membrane potting agent, which has excellent resistance to internal/external pressure, and also has excellent sealing performance, antifouling property, etc.

Further, the present invention provides a hollow fiber membrane module.

### [Technical Solution]

The present invention provides a polyurethane resin composition for a hollow fiber membrane potting agent, including a polyurethane resin including a residue of a polyol compound and a residue of a polyisocyanate compound; and a hydrophilic additive.

Further, the present invention provides a hollow fiber membrane module, of which at least one end is sealed with a hollow fiber membrane potting agent, the hollow fiber membrane potting agent including a binder resin which includes a polyurethane resin including a residue of a polyol compound and a residue of a polyisocyanate compound; and a hydrophilic additive which is dispersed in the binder resin and includes a polyoxyethylene-polyoxypropylene block copolymer.

Hereinafter, a polyurethane resin composition for a hollow fiber membrane potting agent and a hollow fiber membrane module according to specific embodiments of the present invention will be described in more detail.

According to an embodiment of the present invention, provided is a polyurethane resin composition for a hollow fiber membrane potting agent, including a polyurethane resin including a residue of a polyol compound and a residue of a polyisocyanate compound; and a hydrophilic additive.

The present inventors recognized that the hollow fiber membrane module must maintain resistance and durability against external pressure during use or air pressure during washing of the hollow fiber membrane, if not, problems such as water leakage and rupture of the membrane occur, and therefore, a potting process of sealing both ends or one end of the hollow fiber membrane with a resin is very important and improvement of mechanical properties of a composition for this potting agent is needed, leading to this study. As a result, they found that a composition for a hollow fiber membrane potting agent including a polyurethane resin including a residue of a polyol compound and a residue of a polyisocyanate compound at a particular ratio and a hydrophilic additive exhibits excellent resistance to internal/external pressure and also exhibits excellent sealing performance, antifouling property, etc., thereby completing the present invention.

In particular, the polyurethane resin composition for the hollow fiber membrane potting agent includes the hydrophilic additive in the polyurethane resin to provide hydrophilicity for a potting layer, thereby reducing contamination at an interface between the hollow fiber membrane and the potting layer. The polyurethane resin composition for the hollow fiber membrane potting agent also reduces hardness of the potting layer to provide buffering, thereby preventing detachment of the hollow fiber membrane potting layer.

As used herein, the hollow fiber membrane potting agent is a composition used for sealing both ends or one end of the hollow fiber membrane, and this is used to seal ends of the hollow fiber membrane to prepare the potting layer.

The hydrophilic additive may include a polyoxyethylene-polyoxypropylene block copolymer, and further include polyethylene glycol (PEG), polyethylene oxide (PEO), glycerol (glycerine), polyvinylpyrrolidone (PVP), or a mixture thereof.

Among the hydrophilic additives, especially, the polyoxyethylene-polyoxypropylene block copolymer has high dispersion power and emulsifying power and excellent interfacial adsorption, and therefore, the polyoxyethylene-polyoxypropylene block copolymer may be used to easily mix the polyurethane raw materials. Further, polyoxyethylene of the polyoxyethylene-polyoxypropylene block copolymer exhibits hydrophilicity due to its hydroxyl groups, and therefore, when it is mixed with the polyurethane resin to be used as the polyurethane resin composition for the hollow fiber membrane potting agent, a hollow fiber membrane potting layer showing excellent sealing performance with the hollow fiber membrane and antifouling property at the interface may be prepared.

The polyoxyethylene-polyoxypropylene block copolymer may have a weight average molecular weight of 1,000 to 10,000 g/mol, and preferably, a weight average molecular weight of 2,000 to 8,000 g/mol. If the molecular weight of the block copolymer is too low, viscosity becomes low, and thus mixing of the block polymer in the polyurethane resin may be difficult. If the molecular weight of the block copolymer is too high, a large amount of foams are generated in the polyurethane resin.

The polyoxyethylene-polyoxypropylene block copolymer may include 10 to 80 parts by weight, and preferably, 30 to 50 parts by weight of the polyoxyethylene-based repeating unit. Since the polyoxyethylene-based repeating unit exhibits hydrophilicity, the polyoxyethylene-polyoxypropylene block copolymer including the same may have high hydrophilicity. Further, the polyoxyethylene-based repeating unit is rarely lost from the polyurethane composition for the hollow fiber membrane potting agent, and therefore, the block copolymer including the polyoxyethylene-based repeating unit at the above weight ratio is preferably used.

The hydrophilic additive may be included in an amount of 1 to 20 parts by weight, preferably 1 to 10 parts by weight, and more preferably 1 to 5 parts by weight, based on total 100 parts by weight of the polyurethane resin composition for the hollow fiber membrane potting agent. If the content of the hydrophilic additive is too small, improvement of hydrophilicity may be slight. If the content of the hydrophilic additive is too large, the polyurethane resin composition for the hollow fiber membrane potting agent may have too low hardness.

Meanwhile, the polyurethane resin included in the polyurethane resin composition for the hollow fiber membrane potting agent may include a residue of a polyol compound and a residue of a polyisocyanate compound.

The residue of the polyol compound and the residue of the polyisocyanate compound may be mixed at a weight ratio of 3:1 to 1:3, and preferably 2:1 to 1:2. In particular, the polyol compound and the polyisocyanate compound may be included at the above ratio to prepare the polyurethane resin with excellent durability, which may be used for water treatment, because an elution amount is small when applied to the hollow fiber membrane module.

The polyurethane resin may be included in an amount of 80 to 99 parts by weight, and preferably 95 to 99 parts by weight, based on total 100 parts by weight of the polyurethane resin composition for the hollow fiber membrane potting agent.

The polyol compound constituting the polyurethane resin may include a polyether-based polyol, a polyester-based polyol, a polylactone-based polyol, a polyolefin-based polyol, a castor oil-based polyol, or a mixture thereof, and preferably, castor oil-based polyol which is non-toxic to human body and has excellent stability.

The polyisocyanate compound means a compound having a plurality of isocyanate groups. The polyisocyanate compound may be a polyisocyanate including aliphatic, alicyclic, araliphatic, aromatic, and heterocyclic functional groups, and represented by Chemical Formula Q(NCO)n. Herein, n is an integer of 2 to 4, and Q is an aliphatic, alicyclic, aromatic, or araliphatic hydrocarbon functional group having 2 to 18 carbon atoms, preferably 6 to 10 carbon atoms. Specific examples of the polyisocyanate compound may include diisocyanate, 1,4-tetramethylene diisocyanate, 1,6-hexamethylene diisocyanate (HDI), 1,12-dodecane diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethyl-cyclohexane, 2,4-hexahydrotoluene diisocyanate, 2,6-hexahydrotoluene diisocyanate, hexahydro-1,3-phenylene diisocyanate, hexahydro-1,4-phenylene diisocyanate, perhydro-2,4'-diphenylmethane diisocyanate, perhydro-4,4'-diphenylmethane diisocyanate, 1,3-phenylene diisocyanate, 1,4-phenylene diisocyanate, 1,4-durol diisocyanate (DDI), 4,4'-stilbene diisocyanate, 3,3'-dimethyl-4,4'-biphenylene diisocyanate (TODI), toluene 2,4-diisocyanate, toluene 2,6-diisocyanate (TDI), diphenylmethane-2,4'-diisocyanate (MDI), 2,2'-diphenylmethane diisocyanate (MDI), diphenylmethane-4,4'-diisocyanate (MDI), naphthylene-1,5-isocyanate (NDI) or a mixture of two or more thereof, and preferably, 2,6-diisocyanate (TDI) or diphenylmethane diisocyanate (MDI) with excellent stability.

The polyurethane resin composition for the hollow fiber membrane potting agent may further include an additive to improve physical properties of the resin, such as a chain extender, a surfactant, an antifoaming agent, a defoaming agent, a flame retardant, a plasticizer, a pigment, a dye, a stabilizer, a bacteriostatic agent, a filler, a moisture scavenger, an adhesion promoter, a weather resistance modifying agent, etc., depending on a particular use or purpose.

Meanwhile, according to another embodiment of the present invention, provided is a hollow fiber membrane module, of which at least one end is sealed with the hollow fiber membrane potting agent, the hollow fiber membrane potting agent including the binder resin which includes the polyurethane resin including the residue of the polyol compound and the residue of the polyisocyanate compound; and the hydrophilic additive which is dispersed in the binder resin and includes the polyoxyethylene-polyoxypropylene block copolymer.

As described above, the present inventors performed experiments to demonstrate that the potting layer of the hollow fiber membrane, which is formed by sealing ends of the hollow fiber membrane with the hollow fiber membrane potting agent including the polyurethane resin and the hydrophilic additive, has excellent resistance to internal/external pressure and also has excellent sealing performance, antifouling property, etc., thereby completing the present invention.

The sealing of the ends of the hollow fiber membrane with the hollow fiber membrane potting agent may be performed by mixing and curing the above-described polyurethane resin composition for the hollow fiber membrane potting agent at a temperature of 0 to 100°C, preferably 20 to 80°C, and preferably 30 to 60°C.

The hollow fiber membrane potting agent may have hardness (Shore-A) of 20 to 70.

Details of the polyol compound, polyisocyanate compound, polyurethane resin, polyoxyethylene-polyoxypropylene block copolymer, hydrophilic additive, etc. are the same as described in the polyurethane resin composition for the hollow fiber membrane potting agent of an embodiment without limitation.

Further, the hollow fiber membrane module is constituted according to a common module constitution, except that the above-described polyurethane resin composition for the hollow fiber membrane potting agent is used to perform a potting process of sealing the hollow fiber membrane. Therefore, a detailed description thereof will be omitted.

### [ADVANTAGEOUS EFFECTS]

According to the present invention, provided is a polyurethane resin composition for a hollow fiber membrane potting agent, which has excellent resistance to internal/external pressure, and also has excellent sealing performance, antifouling property, etc., and a hollow fiber membrane module including the composition.

### [DETAILED DESCRIPTION OF THE EMBODIMENTS]

Hereinafter, the present invention will be described in more detail in the following Examples. However, the following Examples are for illustrative purposes only, and the invention is not intended to be limited by the following Examples.

### <Examples and Comparative Examples>

### Example 1

(1) A polyurethane resin having 100 parts by weight of a polyol compound (castor oil-based polyol) and 110 parts by weight of a polyisocyanate compound (hexamethylene diisocyanate) was prepared.
(2) 99 parts by weight of the polyurethane resin and 1 part by weight of a polyoxyethylene-polyoxypropylene block copolymer (PE-64) were uniformly mixed to prepare a polyurethane resin composition for a hollow fiber membrane potting agent. The polyoxyethylene-polyoxypropylene block copolymer had a weight average molecular weight of 2,900 g/mol and a content of the polyoxyethylene in the block copolymer was 40 parts by weight.
(3) The polyurethane resin composition for the hollow fiber membrane potting agent was left at room temperature for 24 hours, and then completely cured to prepare a potting layer. A contact angle of the potting layer thus prepared was measured to examine hydrophilicity, and hardness was measured using a hardness tester. The results are given in the following Table 1.

### Example 2

A potting layer was prepared in the same manner as in Example 1, except that the polyurethane resin was used in an amount of 97 parts by weight and the polyoxyethylene-polyoxypropylene block copolymer was used in an amount of 3 parts by weight. Its contact angle and hardness were measured and given in the following Table 1.

### Example 3

A potting layer was prepared in the same manner as in Example 1, except that the polyurethane resin was used in an amount of 95 parts by weight and the polyoxyethylene-polyoxypropylene block copolymer was used in an amount of 5 parts by weight. Its contact angle and hardness were measured and given in the following Table 1.

### Example 4

A potting layer was prepared in the same manner as in Example 1, except that the polyurethane resin was used in an amount of 93 parts by weight and the polyoxyethylene-polyoxypropylene block copolymer was used in an amount of 7 parts by weight. Its contact angle and hardness were measured and given in the following Table 1.

### Comparative Example 1

A potting layer was prepared in the same manner as in Example 1, except that the polyurethane resin was used in an amount of 100 parts by weight without using the polyoxyethylene-polyoxypropylene block copolymer. Its contact angle and hardness were measured and given in the following Table 1.

### <Experimental Examples>

### Experimental Example 1: Measurement of contact angle

In order to measure the degree of surface hydrophilicity of the polyurethane resin layers prepared in Examples 1 to 4 and Comparative Example 1, contact angles measured by a contact angle analyzer (SEO Co., Ltd. Phoenix 300 touch) were compared and given in Table 1.

### Experimental Example 2: Measurement of hardness

Hardness of the polyurethane resins prepared in Examples 1 to 4 and Comparative Example 1 was measured by a hardness tester (Shore-A), and the results are given in Table 1.

**[Table 1]**

| Section | Initial contact angle (°) | Hardness (Shore A, 25°C, Hs) |
|---|---|---|
| Example 1 | 78 | 63 |
| Example 2 | 71 | 55 |
| Example 3 | 83 | 46 |
| Example 4 | 84 | 34 |
| Comparative Example 1 | 90 | 77 |

As shown in Table 1, with regard to the contact angle, the polyurethane resin layers prepared by addition of the hydrophilic additive, polyoxyethylene-polyoxypropylene block copolymer in Examples 1 to 4 showed improved hydrophilicity, compared to the polyurethane resin layer prepared without addition of the hydrophilic additive in Comparative Example 1. In particular, the polyurethane resin layers containing 1 to 3 parts by weight of the hydrophilic additive showed higher hydrophilicity than the polyurethane resin layer containing 5 parts by weight or more of the hydrophilic additive, indicating that hydrophilicity of the polyurethane resin is improved by a proper amount of the hydrophilic additive.

Further, the polyurethane resin layers prepared by addition of the polyoxyethylene-polyoxypropylene block copolymer in Examples 1 to 4 showed low hardness, compared to the polyurethane resin layer prepared without addition of the hydrophilic additive in Comparative Example 1, indicating that the hydrophilic additive improves hydrophilicity and also reduces hardness of the resin layer to form a buffering layer, leading to prevention of detachment and rupture of the hollow fiber membrane due to air pressure upon backwashing thereof.

## Claims

1. A polyurethane resin composition for a hollow fiber membrane potting agent, the polyurethane resin composition comprising:
a polyurethane resin comprising a residue of a polyol compound and a residue of a polyisocyanate compound; and
a hydrophilic additive comprising a polyoxyethylene-polyoxypropylene block copolymer.

2. The polyurethane resin composition for the hollow fiber membrane potting agent of claim 1, wherein the hydrophilic additive further comprises one or more compounds selected from the group consisting of polyethylene glycol (PEG), polyethylene oxide (PEO), glycerol (glycerine) and polyvinylpyrrolidone(PVP).

3. The polyurethane resin composition for the hollow fiber membrane potting agent of claim 1, wherein the polyoxyethylene-polyoxypropylene block copolymer has a weight average molecular weight of 2,000 to 8,000 g/mol.

4. The polyurethane resin composition for the hollow fiber membrane potting agent of claim 1, wherein the polyoxyethylene-polyoxypropylene block copolymer comprises 10 to 80 parts by weight of a polyoxyethylene-based repeating unit.

5. The polyurethane resin composition for the hollow fiber membrane potting agent of claim 1, wherein the hydrophilic additive is comprised in an amount of 1 to 20 parts by weight, based on total 100 parts by weight of the polyurethane resin composition for the hollow fiber membrane potting agent.

6. The polyurethane resin composition for the hollow fiber membrane potting agent of claim 1, wherein the residue of the polyol compound and the residue of the polyisocyanate compound are mixed at a weight ratio of 3:1 to 1:3.

7. The polyurethane resin composition for the hollow fiber membrane potting agent of claim 1, wherein the polyol compound comprises one or more polyols selected from the group consisting of a polyether-based polyol, a polyester-based polyol, a polylactone-based polyol, a polyolefin-based polyol, and a castor oil-based polyol.

8. The polyurethane resin composition for the hollow fiber membrane potting agent of claim 1, wherein the polyisocyanate compound comprises one or more selected from the group consisting of diisocyanate, 1,4-tetramethylene diisocyanate, 1,6-hexamethylene diisocyanate (HDI), 1,12-dodecane diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethyl-cyclohexane, 2,4-hexahydrotoluene diisocyanate, 2,6-hexahydrotoluene diisocyanate, hexahydro-1,3-phenylene diisocyanate, hexahydro-1,4-phenylene diisocyanate, perhydro-2,4'-diphenylmethane diisocyanate, perhydro-4,4'-diphenylmethane diisocyanate, 1,3-phenylene diisocyanate, 1,4-phenylene diisocyanate, 1,4-durol diisocyanate (DDI), 4,4'-stilbene diisocyanate, 3,3'-dimethyl-4,4'-biphenylene diisocyanate (TODI), toluene 2,4-diisocyanate, toluene 2,6-diisocyanate (TDI), diphenylmethane-2,4'-diisocyanate (MDI), 2,2'-diphenylmethane diisocyanate (MDI), diphenylmethane-4,4'-diisocyanate (MDI), and naphthylene-1,5-isocyanate (NDI).

9. The polyurethane resin composition for the hollow fiber membrane potting agent of claim 1, further comprising one or more additives selected from the group consisting of a chain extender, a surfactant, an antifoaming agent, a defoaming agent, a flame retardant, a plasticizer, a pigment, a dye, a stabilizer, a bacteriostatic agent, a filler, a moisture scavenger, an adhesion promoter, and a weather resistance modifying agent.

10. A hollow fiber membrane module, of which at least one end is sealed with a hollow fiber membrane potting agent, the hollow fiber membrane potting agent comprising a binder resin which includes a polyurethane resin comprising a residue of a polyol compound and a residue of a polyisocyanate compound; and a hydrophilic additive which is dispersed in the binder resin and comprises a polyoxyethylene-polyoxypropylene block copolymer.

11. The hollow fiber membrane module of claim 10, wherein the hollow fiber membrane potting agent has hardness (Shore-A) of 20 to 70.
